# EUROPÄISCHE PATENTSCHRIFT

(11) **EP 0 757 419 B1**
(45) Veröffentlichungstag und Bekanntmachung des Hinweises auf die Patenterteilung: **29.04.1998**
(21) Anmeldenummer: 96111650.6
(22) Anmeldetag: 19.07.1996
(51) Int. Cl.: H02G 3/12

(54) **Montageelement für Installationskanäle**
Mounting element for installation channel
Elément de montage pour canal d'installation

(30) Priorität: 02.08.1995 DE 29512421 U
(43) Veröffentlichungstag der Anmeldung: 05.02.1997
(73) Patentinhaber: Tehalit GmbH, D-67716 Heltersberg (DE)
(72) Erfinder: Mayer, Hans, 66851 Bann/Pfalz (DE)
(74) Vertreter: Patentanwälte Möll und Bitterich

(56) Entgegenhaltungen:
- DE-U- 9 203 112

## Beschreibung

Die Erfindung betrifft Montageelemente gemäß dem Oberbegriff des Anspruchs 1 zum lösbaren Befestigen von Elektro-Installationsgeräten in Elektro-Installationskanälen, die an ihrer Kanalrückwand eine Längsnut mit etwa T-förmigem Querschnitt besitzen.

Ein derartiges Montageelement ist beispielsweise bekannt aus der EP-A-0 584 444. Das bekannte Montageelement besitzt ein drehbares Klemmelement mit einem T-förmigen Kopf, der in die T-Nut an der Kanalrückwand eingeführt und nach einer 90 Grad-Drehung verankert werden kann. Die zum Herstellen und Lösen dieser Verankerung erforderliche Heb-Dreh-Bewegung des Klemmelementes wird durch geeignet geformte Erhöhungen und Vertiefungen im Boden des Montageelementes zwangsweise sichergestellt. Die Betätigung des Klemmelements erfolgt über ein Schub-Kurbel-Getriebe.

Im Laufe der Zeit hat sich herausgestellt, daß die Fertigung einer hohen Präzision und die Montage eines hohen Zeitaufwandes bedarf. Der damit verbundene Aufwand ist bei speziellen Anwendungsfällen zweifellos gerechtfertigt, gleichwohl bestand das Bedürfnis nach einer Vereinfachung.

Die darin liegende Aufgabe, Herstellungs- und Montageaufwand erheblich zu vereinfachen, wird gelöst durch ein Montageelement mit den Merkmalen des Anspruchs 1.

Die wesentlichen Vorteile der vorliegenden Erfindung beruhen auf der mit einem in Seitenansicht treppenförmigen Abschnitt ausgerüsteten Flachfeder. Dank dieser Formgebung kann die Flachfeder sowohl einwärts und auswärts als auch aufwärts und abwärts sowie in Umfangsrichtung federn. Dadurch ist ohne weitere Maßnahme ein Ausgleich der Fertigungstoleranzen und die Erzeugung des erforderlichen Anpreßdrucks möglich. Die Nase an der Flachfeder ist in den umlaufenden Einstich am Klemmelement eingeschnappt und hält das Klemmelement in jeder Situation sicher fest.

Vorteilhafterweise ist der treppenförmige Abschnitt im Bereich des Bodens positioniert.

Gemäß einer Weiterbildung der Erfindung kann auch der Führungszylinder einen treppenförmigen Fuß besitzen.

Gemäß einer bevorzugten Ausgestaltung der Erfindung ist die Flachfeder durch einen dreiseitigen Freischnitt in Wand und Fuß des Führungszylinders und im Boden gebildet. Diese Ausführungsform ist insbesondere dann von Vorteil, wenn Boden, Führungszylinder, Flachfeder und gegebenenfalls deren treppenförmigen Füße einstückig aus Kunststoff gespritzt sind.

Vorteilhafterweise besitzt der Führungszylinder einen quadratischen Querschnitt. Auf diese Weise hat das drehbare Klemmelement bzw. dessen Schaft nur einen jeweils linienförmigen, reibungsarmen Kontakt zum Führungszylinder.

Gemäß einer vorteilhaften Weiterbildung der Erfindung weist das Klemmteil oberhalb des T-Kopfes einen sektorförmigen, insbesondere kreissektorförmigen Teller auf. Dieser Teller sitzt vorzugsweise in einer Vertiefung, die in die Unterseite des Bodens und vorzugsweise im Bereich des treppenförmigen Fußes des Führungszylinders eingeformt ist. Dieser Teller verhindert, daß das Klemmelement nach oben aus dem Führungszylinder herausgezogen werden kann.

Wesentliche Aufgabe des sektorförmigen Tellers ist es jedoch, zusammen mit wenigstens einem auf der Unterseite des Bodens, vorzugsweise im Bereich der Vertiefung angebrachten Anschlag den Drehwinkel des Klemmelementes auf vorzugsweise 90 Grad zu begrenzen.

Anhand der Zeichnung soll die Erfindung in Form eines Ausführungsbeispiels näher erläutert werden. Es zeigen
- Fig. 1: eine auszugsweise perspektivische Darstellung eines Montageelements mit einer angeformten Halteeinrichtung für die Montage von Elektro-Installationsgeräten in Elektro-Installationskanälen,
- Fig. 2: eine Draufsicht auf die Halteeinrichtung der Fig. 1,
- Fig. 3: einen Schnitt durch die Haltevorrichtung der Fig. 2 entlang der Linie III-III,
- Fig. 4: einen Schnitt durch die Haltevorrichtung der Fig. 2 entlang der Linie IV-IV,
- Fig. 5: eine Sicht auf die Unterseite der Haltevorrichtung der Fig. 2 bis 4,
- Fig. 6: eine der Fig. 2 entsprechende Draufsicht auf die Haltevorrichtung, jedoch mit eingesetztem Klemmteil,
- Fig. 7: einen Schnitt durch die Haltevorrichtung der Fig. 6 entlang der Linie VII-VII mit eingesetztem Klemmteil,
- Fig. 8: einen weiteren Schnitt durch die Haltevorrichtung der Fig. 6 entlang der Linie VIII-VIII mit eingesetztem Klemmteil und
- Fig. 9: eine Draufsicht auf die Unterseite der Haltevorrichtung gemäß Fig. 6 bis 8 mit eingesetztem Klemmteil.

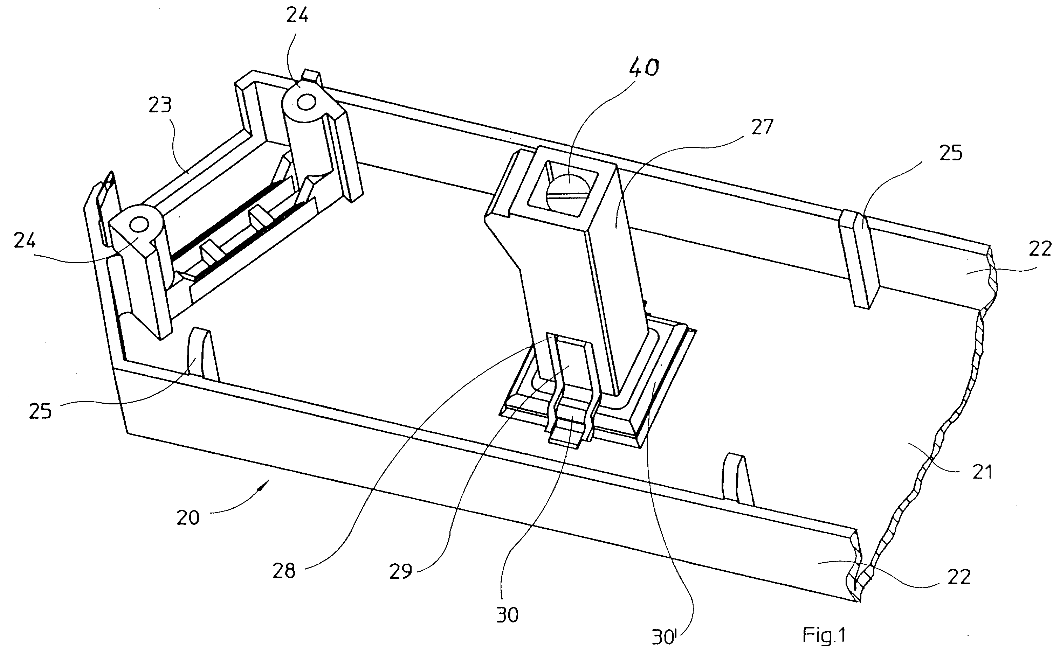

Fig. 1 zeigt ausschnittsweise und in perspektivischer Darstellung ein Montageelement 20 für die Montage von Geräten, z. B. Elektro-Installationsgeräten (nicht dargestellt) in Elektro-Installationskanälen (nicht dargestellt) mit einer T-förmigen Nut an der Kanalrückwand. Das Montageelement 20 besteht im wesentlichen aus einem Boden 21, Seitenwänden 22, einer Kabeleinführungsöffnung 23 mit einstückig angeformten Befestigungspfosten 24 für die Kabelklemmvorrichtung (nicht dargestellt) und mit angeformten Führungs- und Haltepfosten 25 für einen aufzusetzenden Deckel (nicht dargestellt).

Ferner erkennt man einen Führungszylinder 27 mit quadratischem Querschnitt, der über einer Öffnung 26 im Boden 21 errichtet ist.

Der Führungszylinder 27 besitzt einen treppenförmigen Fuß 30'. Durch einen dreiseitigen Freischnitt im Bereich der Seitenwand des Führungszylinders 27, des Fußes 30' und des Bodens 21 ist eine Flachfeder 29 mit treppenförmigem Fuß 30 gebildet, deren Form und Funktion anhand der nachfolgenden Figuren näher erläutert werden sollen.

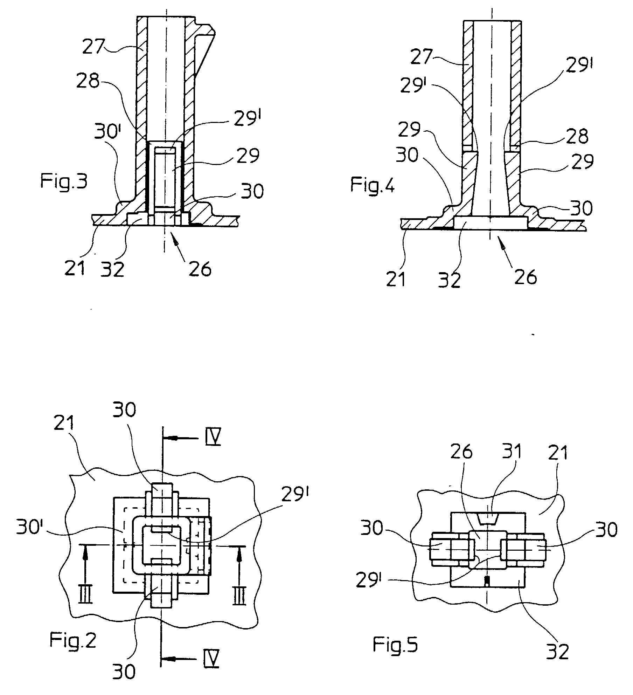

Die Fig. 2 bis 5 zeigen in Draufsicht, erstem Schnitt, zweitem Schnitt und Druntersicht den Führungszylinder 27, seinen treppenförmigen Fuß 30', den Boden 21, die Öffnung 26 im Boden 21 sowie zwei Flachfedern 29 mit treppenförmigen Bereichen 30 in vergrößerter Darstellung.

Man erkennt, daß die Flachfedern 29 an ihrem freien Ende zusätzlich mit je einer Nase 29' ausgerüstet sind, die zum Zentrum des Führungszylinders 27 hin orientiert ist.

Man erkennt des weiteren, daß in die Unterseite des Bodens 21 und im Bereich des treppenförmigen Fußes 30' des Führungszylinders 27 eine Vertiefung 32 eingeformt ist.

Dank des treppenförmigen Bereiches 30 können die Flachfedern 29 nicht nur einwärts und auswärts, sondern insbesondere auch aufwärts und abwärts federn, ebenso in Umfangsrichtung.

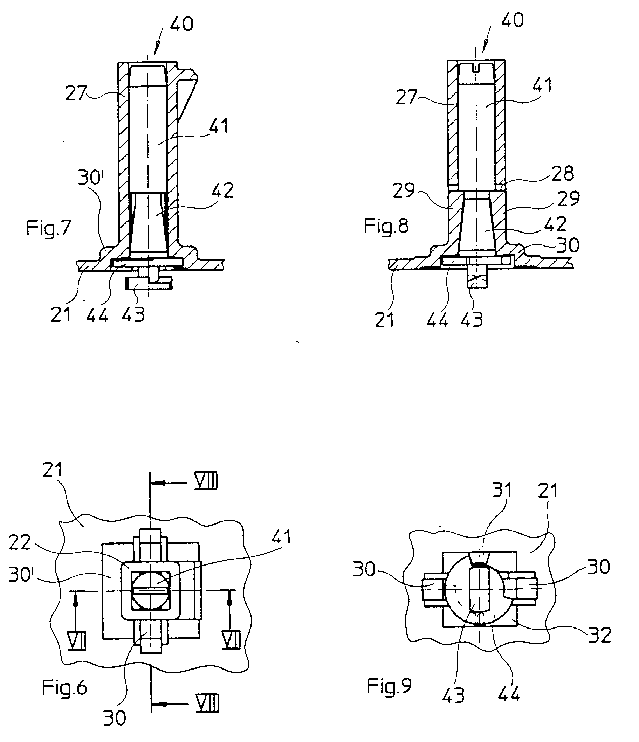

Einzelheiten hierzu ergeben sich aus den Fig. 6 bis 9, die die Haltevorrichtung in den den Fig. 2 bis 5 entsprechenden Darstellungen zeigen, jedoch jeweils mit eingesetztem Klemmteil 40.

Das Klemmteil 40 besteht aus einem zylindrischen Schaft 41 mit einem umlaufenden Einstich 42, der mit den Flachfedern 29 bzw. deren Nasen 29' korrespondiert. Das Klemmelement 40 besitzt an seinem von vorne zugänglichen Ende einen Schraubendreherschlitz. An der Unterseite besitzt das Klemmteil 40 einen T-förmigen Kopf 43, mit dessen Hilfe das Montageelement 20 in der T-förmigen Nut an der Rückwand eines Elektro-Installationskanals verankert werden kann. Die oberen Flächen des T-förmigen Kopfes 43 sind angeschrägt, um das Verriegeln in der T-Nut zu erleichtern.

Mit einigem Abstand zum T-Kopf 43 ist am Klemmteil 40 ein kreissektorförmiger Teller 44 angebracht. Dieser sitzt in der Vertiefung 32. Im Bereich der Vertiefung 32 ist des weiteren ein Anschlag 31 angeformt, der mit dem Teller 44 zusammenwirkt und die Drehbewegung des Klemmteils 40 auf 90 Grad begrenzt.

## Patentansprüche

1. Montageelement (20) zum lösbaren Befestigen von Elektro-Installationsgeräten (10) in Elektro-Installationskanälen, die an ihrer Kanalrückwand eine Längsnut mit etwa T-förmigem Querschnitt besitzen, umfassend einen Boden (21), wenigstens eine Öffnung (26) im Boden (21), in die ein Klemmteil (40) mit einem in die T-Nut einführbaren T-Kopf (43) drehbar eingesetzt ist, das von vorne betätigbar ist, und einen über der Öffnung (26) errichteten Führungszylinder (27), dadurch gekennzeichnet, daß in der Wand des Führungszylinders (27) wenigstens ein Ausschnitt (28) vorgesehen ist, daß im Ausschnitt (28) eine Flachfeder (29) positioniert ist, daß die Flachfeder (29) einen in Seitenansicht treppenförmigen Abschnitt (30) besitzt, daß die Flachfeder (29) an ihrem freien Ende eine zur Mitte des Führungszylinders (27) hin gerichtete Nase (29') besitzt und daß das Klemmteil (40) einen Schaft (41) besitzt, der im Führungszylinder (27) geführt ist und einen Einstich (42) aufweist, in den die Nase (29') einschnappt.

2. Montageelement nach Anspruch 1, dadurch gekennzeichnet, daß der treppenförmige Abschnitt (30) im Bereich des Bodens (21) positioniert ist.

3. Montageelement nach Anspruch 1 oder 2, dadurch gekennzeichnet, daß der Führungszylinder (27) einen treppenförmigen Fuß (30') besitzt.

4. Montageelement nach einem der Ansprüche 1 bis 3, dadurch gekennzeichnet, daß der Führungszylinder (27) einen quadratischen Querschnitt besitzt.

5. Montageelement nach einem der Ansprüche 1 bis 4, dadurch gekennzeichnet, daß die Flachfeder (29) durch einen dreiseitigen Freischnitt in Wand und Fuß (30') des Führungszylinders (27) und im Boden (21) gebildet ist.

6. Montageelement nach einem der Ansprüche 1 bis 5, dadurch gekennzeichnet, daß das Klemmteil (40) oberhalb des T-Kopfes (43) einen sektorförmigen, insbesondere kreissektorförmigen Teller (44) aufweist.

7. Montageelement nach einem der Ansprüche 1 bis 6, dadurch gekennzeichnet, daß in die Unterseite des Bodens (21) um die Öffnung (26) herum und vorzugsweise im Bereich des treppenförmigen Fußes (30') des Führungszylinders (27) eine Vertiefung (32) eingeformt ist.

8. Montageelement nach einem der Ansprüche 1 bis 7, dadurch gekennzeichnet, daß an der Unterseite des Bodens (21), vorzugsweise in der Vertiefung (32), ein Anschlag (31) angeformt ist, der den Drehwinkel des Klemmteils (40) begrenzt, vorzugsweise auf 90 Grad.

9. Montageelement nach einem der Ansprüche 1 bis 8, dadurch gekennzeichnet, daß Boden (21), Führungszylinder (27) und gegebenenfalls Fuß (30') einstückig sind.

10. Montageelement nach einem der Ansprüche 1 bis 9, dadurch gekennzeichnet, daß Flachfeder (29, 29', 30) und Boden (21) einstückig sind.

## Claims

1. Mounting element (20) for securing electrical installation appliances (10) in a removable manner in electrical installation ducts which have a longitudinal slot with an approximately T-shaped cross section in their rear duct wall, the element comprising a base (21), at least one opening (26) in the base (21), into which opening a clamping part (40) with a T-head (43), which can be introduced into the T-slot, is inserted such that it can rotate, which T-head can be operated from the front, and also comprising a guide cylinder (27) mounted above the opening (26),
characterised in that at least one cut-out (28) is provided in the wall of the guide cylinder (27), that a flat spring (29) is positioned in the cut-out (28), that the flat spring (29) has a stepped portion (30) in a side view, that the flat spring (29) has a lug (29'), which points towards the centre of the guide cylinder (27), at its free end, and that the clamping part (40) has a stem (41) which is guided in the guide cylinder (27) and comprises a recess (42) into which the lug (29') snaps.

2. Mounting element according to claim 1, characterised in that the stepped portion (30) is positioned in the region of the base (21).

3. Mounting element according to claim 1 or 2, characterised in that the guide cylinder (27) has a stepped foot (30').

4. Mounting element according to one of claims 1 to 3, characterised in that the guide cylinder (27) has a square cross section.

5. Mounting element according to one of claims 1 to 4, characterised in that the flat spring (29) is formed by blanking on three sides out of the wall and the foot (30') of the guide cylinder (27) and out of the base (21).

6. Mounting element according to one of claims 1 to 5, characterised in that the clamping part (40) comprises a sector-shaped, in particular circular sector-shaped plate (44) above the T-head (43).

7. Mounting element according to one of claims 1 to 6, characterised in that a depression (32) is formed into the underside of the base (21) around the opening (26) and preferably in the region of the stepped foot (30') of the guide cylinder (27).

8. Mounting element according to one of claims 1 to 7, characterised in that a stop (31) is moulded onto the underside of the base (21), preferably in the depression (32), which stop limits the angle of rotation of the clamping part (40), preferably to 90 degrees.

9. Mounting element according to one of claims 1 to 8, characterised in that the base (21), the guide cylinder (27) and optionally the foot (30') are formed in one piece.

10. Mounting element according to one of claims 1 to 9, characterised in that the flat spring (29, 29', 30) and the base (21) are formed in one piece.

## Revendications

1. Elément de montage (20) pour la fixation amovible d'appareils d'installation électrique (10) dans des conduits d'installation électrique, qui ont sur leur paroi arrière une rainure longitudinale avec une section sensiblement en forme de T, comprenant un fond (21), au moins une ouverture (26) dans le fond (21), dans laquelle une pièce de serrage (40) avec une tête en T (43) insérable dans la rainure en T est introduite de façon pivotante, laquelle pièce peut être actionnée par l'avant, et un cylindre de guidage (27) monté au-dessus de l'ouverture (26), caractérisé en ce qu'on prévoit au moins une découpe (28) dans la paroi du cylindre de guidage (27), en ce qu'un ressort plat (29) est positionné dans la découpe (28), en ce que le ressort plat (29) a une partie (30) en gradins en vue latérale, en ce que le ressort plat (29) a sur son extrémité libre un ergot (29') orienté en direction du centre du cylindre de guidage (27) et en ce que la pièce de blocage (40) a une tige (41) qui est guidée dans le cylindre de guidage (27) et présente une encoche (42) dans laquelle s'enclenche l'ergot (29').

2. Elément de montage selon la revendication 1, caractérisé en ce que la partie (30) en gradins est positionnée dans la zone du fond (21).

3. Elément de montage selon la revendication 1 ou 2, caractérisé en ce que le cylindre de guidage (27) a une embase (30') en gradins.

4. Elément de montage selon l'une quelconque des revendications 1 à 3, caractérisé en ce que le cylindre de guidage (27) a une section carrée.

5. Elément de montage selon l'une quelconque des revendications 1 à 4, caractérisé en ce que le ressort plat (29) est formé par une entaille trilatérale dans la paroi et la base (30') du cylindre de guidage (27) et dans le fond (21).

6. Elément de montage selon l'une quelconque des revendications 1 à 5, caractérisé en ce que la pièce de blocage (40) présente au-dessus de la tête en T (43) un plateau (44) en forme de secteur, en particulier en forme de secteur de cercle.

7. Elément de montage selon l'une quelconque des revendications 1 à 6, caractérisé en ce qu'une cavité (32) est formée dans la face inférieure du fond (21) autour de l'ouverture (26) et de préférence dans la zone de l'embase (30') en gradins du cylindre de guidage (27).

8. Elément de montage selon l'une quelconque des revendications 1 à 7, caractérisé en ce que, sur la face inférieure du fond (21), de préférence dans la cavité (32), est formée une butée (31) qui limite l'angle de rotation de la pièce de blocage (40), de préférence à 90 degrés.

9. Elément de montage selon l'une quelconque des revendications 1 à 8, caractérisé en ce que le fond (21), le cylindre de guidage (27) et éventuellement l'embase (30') sont d'une seule pièce.

10. Elément de montage selon l'une quelconque des revendications 1 à 9, caractérisé en ce que le ressort plat (29, 29', 30) et le fond (21) sont d'une seule pièce.
